# EUROPEAN PATENT SPECIFICATION

(11) **EP 4 054 955 B1**
(45) Date of publication and mention of the grant of the patent: **27.08.2025**
(21) Application number: 20800213.9
(22) Date of filing: 06.11.2020
(51) Int. Cl.: B65D 85/804, A47J 31/36

(54) **A CAPSULE HAVING A SEALING RING WITH AN INNER LIQUID-PERMEABLE COMPRESSIBLE LAYER AND OUTER LIQUID-IMPERMEABLE SHIELDING LAYER**
KAPSEL MIT EINEM DICHTUNGSRING MIT EINER INNEREN FLÜSSIGKEITSDURCHLÄSSIGEN KOMPRIMIERBAREN SCHICHT UND EINER ÄUSSEREN FLÜSSIGKEITSUNDURCHLÄSSIGEN SCHUTZSCHICHT
CAPSULE AYANT UNE BAGUE D'ÉTANCHÉITÉ AVEC UNE COUCHE COMPRESSIBLE INTERNE PERMÉABLE AUX LIQUIDES ET UNE COUCHE DE PROTECTION EXTERNE IMPERMÉABLE AUX LIQUIDES

(30) Priority: 08.11.2019 NL 2024197
(43) Date of publication of application: 14.09.2022
(73) Proprietor: Euro-Caps Holding B.V., 3044 CE Rotterdam (NL)
(72) Inventor: KAY, Anthony, 8005 Cape Town (ZA)
(74) Representative: EP&C
(86) International application number: PCT/EP2020/081360
(87) International publication number: WO 2021/089826

(56) References cited:
- EP-A1- 2 443 046
- EP-B1- 2 443 046
- WO-A1-2019/092144
- WO-A1-2020/104667
- GB-A- 191 024 452

## Description

### FIELD OF THE INVENTION

This invention relates to capsules for containing a substance from which beverages can be produced and that are designed for insertion in a beverage production machine in which pressurized liquid enters the capsule in order to interact with the substance in the capsule and to drain a beverage from the capsule.

### BACKGROUND TO THE INVENTION

Such capsules are known in a wide variety of embodiments, and typically comprise a cup-like capsule body with a circumferential side wall, a transverse base wall at a first end of the side wall, and a radially outwardly protruding flange encircling the side wall at its second end.

A system which is widely known as the Nespresso (Registered Trade Mark) system uses aluminium capsules that contain the substance from which the beverage is produced. The substance initially was ground coffee but subsequently capsules containing other substances such as milk powder, hot chocolate and tea have been introduced.

Nespresso capsules each have a frustoconical side wall, a transverse base wall at a smaller diameter end of the side wall, and an outwardly projecting flange which encircles the side wall at its wider diameter end. During manufacturing, the capsule is filled through its wider end and then closed by a foil closure disc that is adhered to the flange.

A beverage extraction machine which is used with these capsules comprises a structure for positioning the capsule in a cavity of the machine. A longitudinal centre axis of the capsule then extends horizontally and the flange lies in a vertical plane. A cylindrical pressing sleeve of the machine, in use, gets pushed with a leading end against that surface of the flange which faces towards the smaller end of the capsule. At a same time the sleeve then presses the foil closure disc against a profiled back plate. An injector penetrates the capsule through the base wall as the sleeve moves forward to press on the flange, allowing pressurized hot liquid to enter the capsule.

The liquid is injected into the capsule at a pressure of, for example, 15-19 Bar, and is heated to a temperature, of for example, 95-98 degrees Celsius. The foil closure disc has supported areas which lie against raised zones of the back plate, and has unsupported areas which span across depressions in the back plate. The quickly rising liquid pressure inside the capsule acting on these unsupported areas causes them to burst permitting the beverage to flow out of the capsule through outlet openings which have thus been formed in the foil closure disc.

For a proper and save operation it is essential that there is a liquid tight seal between the leading end of the pressing sleeve of the beverage production machine and the capsule. If this seal is inadequate, hot pressurized liquid flows between the leading end of the sleeve and the flange. This can result in a not high enough pressure building up inside the capsule for the foil closure disc to burst, which means that beverage extraction fails. It can also result in the volume of beverage produced being reduced as liquid by-passes the capsule and flows into for example a trip tray. More dangerously however this then can also result in escaping hot pressurized liquid getting spouted against a consumer who then may get burns.

In order to prevent this, EP-1.654.966 discloses such an aluminium capsule to have its flange equipped with a rubber-elastic resilient sealing member made of another material than the material of the capsule. This rubber-elastic resilient sealing member then may be formed by applying it in viscous or liquid form in the shape of a ring having an L-shaped cross-section against the flange as well as against a portion of the wider end of the frusto-conical side wall. In the alternative the sealing member also may have the shape of an O-ring and may be attached to the capsule body using an adhesive or by welding or by pinching or crimping or a combination thereof.

A disadvantage herewith however is that the environmental friendliness of this capsule leaves to be desired. The resilient sealing member of rubber-elastic material is not biodegradable. Also the rubber-elastic material resilient sealing member cannot easily be separated for recycling purposes from the rest of the capsule body to which it is fixedly attached. Further this would require separate dedicated collection of the consumed capsules, which is rather expensive and cumbersome for consumers. At present millions and millions of those aluminium capsules that get consumed each day worldwide, end up in waste processing facilities where the capsules including their rubber-elastic sealing members get burned.

EP-2.443.046 discloses an alternative in which a plastic capsule comprises a sealing member of which at least an external surface comprises a sheet that is made of fibrous and/or paper-like material which is configured to absorb water during beverage production for achieving a sealing effect. The partly fibrous and/or paper-like material sealing member here encloses a flange of the capsule and thus covers both its upper and lower surfaces and possibly also a portion of a wider end of a frusto-conical side wall directly adjoining the flange.

A disadvantage hereof is that the partly fibrous and/or paper-like material sealing member also needs to contain a ring-shaped barrier of water repellent substance at or near a radial perimeter of the sealing member to suppress radial water leakage of water absorbed in the sealing member through the sealing member itself. For this an adhesive substance can be used that also is used for attaching the fibrous and/or paper-like material to the respective capsule body wall parts. The partly fibrous and/or paper-like material sealing member then can be provided with a concentric circular or ring-shaped strip of adhesive material, which after curing can form the required barrier. Application of the adhesive substance can involve one or more of dipping, spraying, brushing, coating, or a different process. During such application the adhesive substance shall be at least partly absorbed in the fibrous and/or paper-like material of the sealing member. This is a difficult and expensive manufacturing step because the external fibrous and/or paper-like material surface of the sealing member needs to remain being able to absorb water during beverage production for achieving the sealing effect during beverage production.

Another disadvantage is that here also the environmental friendliness of the capsule leaves to be improved. Because of the adhesive substance, the further fibrous and/or paper-like material of the sealing member may no longer be fully biodegradable. Also the partly fibrous and/or paper-like sealing member cannot easily be separated for distinctive recycling purposes from the rest of the plastic capsule body since it is fixedly attached thereto.

WO-2019/092144 discloses yet another alternative in which a capsule comprises a paper or cellulose material sealing member that is held in position in a gutter that is formed between the side wall of the capsule body and an upstanding circumferential wall portion on a flange of the capsule body. Here also residual water in a coffee machine is foreseen to cause a swelling of the paper or cellulose material during beverage production for achieving a sealing effect. In a first embodiment the sealing member is multi-layered and comprises a first outer layer formed of card or cellulose based material, a second layer of a heat seal lacquer or adhesive, and a third inner layer formed of a biodegradable plastic or bioplastic. In a second embodiment the sealing member is also multi-layered and comprises a first outer layer formed of card or cellulose based material, a second layer of a heat seal lacquer or adhesive, a third aluminium foil layer, and a fourth inner layer comprising a heat seal lacquer or adhesive.

It is noted that according to WO-2019/092144 the inner layer of heat seal lacquer or adhesive together with the plastic or bioplastic or aluminium layer can be dispensed with for an aluminium capsule, by plastic inward or outward deformation of the side wall of the capsule body prior to filling the capsule with substance. For example a full paper sealing ring then is first positioned in place around the side wall and against the flange, after which so-called pips get pushed out of the side wall of the capsule at a short height above the flange. The pips can be replaced with other shapes or in the alternative an annular wall can be pushed in from the outside to provide an overhang to retain the sealing member in position. Thus also the sealing member is then held in position and will not fall off.

A disadvantage of those embodiments is that the proper functioning of the sealing member leaves to be desired. In particular the earlier mentioned radial water leakage of water absorbed in the sealing member through the sealing member itself is likely to occur. Another disadvantage is that the environmental friendliness of the capsule needs to be improved for the adhered embodiments. Because of the seal lacquer or adhesive layer and/or the biodegradable plastic or bioplastic or aluminium layers the further card or cellulose based material of the sealing member no longer may be well recyclable. Also the partly card or cellulose based material cannot easily be separated from the rest of the biodegradable plastic or bioplastic or aluminium layers and/or of the aluminium or plastic capsule body to which it is fixedly attached for distinctive recycling purposes of those different types of components. For the full paper sealing ring it is noted that it requires additional deformation steps of the circumferential side wall of the capsule and that it may frequently occur that the vulnerable paper material ring tears apart when trying to position it in place around the gradually increasing frusto-conical side wall during manufacturing.

Another important disadvantage that goes for the external fibrous and/or paper-like material surface of the sealing members of both EP-2.443.046 and WO-2019/092144 is that they become wet during use, which may lead to the fibrous and/or paper material giving free undesired extracted contaminated liquid that may end up in the beverage production machine itself or in a worst case scenario even in the produced beverage itself. This particularly may be the case when the fibrous and/or paper material has been coloured with ink or has been provided with some kind of ink printing at its outer surface. Also the liquid absorbed fibrous and/or paper material may well start to mould or lead to all kinds of other contaminations in for example a trash bin of the beverage production machine or in a specific recycling collection container into which consumers may throw the capsules after they have been used.

### BRIEF DESCRIPTION OF THE INVENTION

The present invention aims to at least partly overcome those disadvantages or to provide a usable alternative. In particular it is an object of the present invention to provide a capsule that is configured so that there is an adequate seal, in use, between a pressing sleeve of an extraction machine and the capsule.

This aim is achieved by means of a capsule for containing a substance from which a beverage can be produced according to claim 1. This capsule, which is designed for insertion in a beverage production machine in which pressurized liquid enters the capsule in order to interact with the substance in the capsule and to drain a beverage from the capsule, comprises a cup-like capsule body with a circumferential side wall, a transverse base wall at a first end of the side wall, and a radially outwardly protruding flange encircling the side wall at its second end. The capsule further comprises a multi-layered sealing ring lying against the flange while encircling the side wall. The sealing ring comprises an inner compressible layer of fibrous and/or cellulose and/or paper material. According to the inventive thought the sealing ring further comprises an outer shielding layer of a liquid-impermeable material, wherein the shielding layer is provided on an outwardly directed external surface of the sealing ring and wherein the shielding layer is configured for shielding the inner compressible layer of fibrous and/or cellulose and/or paper material against pressurized liquid during beverage production.

Thus an improved assembly of a capsule body and a sealing ring is obtained that advantageously is able to offer truly good sealing capacities during beverage production while being easy and economical to manufacture. Not even a small amount of swelling of the compressible layer of fibrous and/or cellulose and/or paper material is necessary for that. The provision of the shielding layer of a liquid-impermeable material on top of the compressible layer of fibrous and/or cellulose and/or paper material, prevents the compressible layer of fibrous and/or cellulose and/or paper material to get wetted, not only during beverage production but also before and after that during transport and storage. A radial leakage of liquid during beverage production via the compressible layer of fibrous and/or cellulose and/or paper material is now efficiently prevented.

Another important advantage is that the shielding layer adds such strength and rigidity on the outwardly directed external surface of the sealing ring onto which a pushing force is to be exerted during manufacturing as well as during use, that the vulnerable layer of fibrous and/or cellulose and/or paper material no longer runs a risk of getting torn or otherwise damaged, but is well able to maintain its integrity and thus offer a superb sealing. A positioning in place of the largely fibrous and/or cellulose and/or paper material sealing ring during manufacturing, in particular towards a tight fit around a frusto-conical side wall, can now easily, quickly and safely be done.

Since the fibrous and/or cellulose and/or paper material no longer becomes wet during initial use, it is also prevented that it may start to give free undesired contaminations that may end up in the beverage production machine itself or in a worst case scenario even in the produced beverage itself. Also a growing of moulds or build-up of other kinds of infection hazards inside the fibrous and/or cellulose and/or paper material no longer are able to take place. Trash bins of the beverage production machines or dedicated specific recycling collection containers into which consumers may throw the capsules after they have been used, can thus remain cleaner and healthier.

The fibrous and/or cellulose and/or paper material is an inexpensive lightweight material that advantageously can be a fully natural material that does not stand in the way of a recycling or bio-degrading or bio-composting of the capsule. The combination of the compressible fibrous and/or cellulose and/or paper material layer that is kept fully dry during use by the liquid-impermeable shielding layer is also a good choice for the high-pressurized and high-temperature saturated steam environment during beverage production. A suitable material choice for the shielding layer can truly prevent sealing ring failure when the intense impact of the hot pressurized liquid reaches the sealing ring. Because of being protected by the shielding layer, the inner fibrous and/or cellulose and/or paper material layer does not get negatively influenced at all by the hot pressurized liquid and thus maintains being fully flexible and compressible. Any leakage of liquid out of the beverage production machine during beverage production can now be significantly reduced. The sealing ring is well able to deal with any surface irregularities of the flange surface of the capsule and of a complementary pressing sleeve surface of the beverage production machine. A relative low pressing force of the pressing sleeve onto the sealing ring and flange already suffices to prevent such potential leaks.

In a preferred embodiment the outer shielding layer is made out of metal, in particular aluminium. This can for example be a metalized coating, an adhered metal layer, or a laminated metal on top of the compressible layer. This choice of material has good liquid-impermeability capacities and, if provided as a relative thin foil/coating/laminate layer also may have good deformation capacities. Also it makes it possible to have the outer shielding layer made out of the same material as an outer layer of the capsule body itself. When the capsule body for example has been made out of aluminium or has been co-moulded with an aluminium outer layer or has been laminated with an outer aluminium layer. This complementary choice of materials also brings the advantage that it makes the recycling process easy and efficient. For example the inner compressible layer of fibrous and/or cellulose and/or paper material than shall be able to fully burn away in a melting oven such that the aluminium material remains and can be used again. Furthermore, such a metal, in particular aluminium, outer shielding layer is both attractive in appearance, being shiny and bright, and is oxygen and moisture impervious, and thus adds in a positive way to an attractive high-quality outer appearance of the capsule. It also makes it possible to use a coloured/printed/patterned metal, in particular aluminium, outer shielding layer, for example as indication of specific types of capsule substance content, without any risk of such colouring/printing/patterning dissolving in the hot pressurized liquid.

In order to increase a bond strength between the metal outer shielding layer and the fibrous and/or cellulose and/or paper material compressible layer it can be advantageous to provide an intermediate plastic lamination in between them. This plastic lamination then can be provided directly against the fibrous and/or cellulose and/or paper material of the compressible layer, whereas an adhesive, like a heat seal lacquer, then can act between the plastic lamination and the capsule body. The advantage hereof is that delamination of the metal outer shielding layer can be avoided.

In another preferred embodiment the outer shielding layer can also be made out of (recycled) plastic. This can for example be a (recycled) plastic lamination on top of the compressible layer. This choice of material also has good liquid-impermeability capacities and, if provided as a relative thin foil/coating/laminate layer also may have good deformation capacities. Also it makes it possible to have the outer shielding layer made out of the same material as an outer layer of the capsule body itself. When the capsule body for example has been made out of plastic or has been co-moulded with a plastic outer layer or has been laminated with an outer plastic layer. This complementary choice of materials then here also brings the advantage that it makes the recycling process easy and efficient. Furthermore, such a plastic outer shielding layer can easily be given all kinds of colours/prints/patterns, for example as indication of specific types of capsule substance content, without any risk of such colouring/printing/patterning dissolving in the hot pressurized liquid.

In a preferred embodiment the fibrous and/or cellulose and/or paper material advantageously can be formed by cardboard. This can be made out of waste paper and is an inexpensive lightweight material, that is well able to maintain being flexible and compressible over time, and that advantageously can be a fully natural material that does not stand in the way of a recycling or bio-degrading or bio-composting of the capsule.

In another preferred embodiment the fibrous and/or cellulose and/or paper material advantageously can be formed by a non-woven fabric-like material. This can be made from fibres (short and/or long) that are bonded together by chemical, mechanical, heat or solvent treatment, and also is an inexpensive lightweight material, that is well able to maintain being flexible and compressible over time, and that advantageously also does not have to stand in the way of a recycling or bio-degrading or bio-composting of the capsule. The non-woven compressible layer of the sealing ring advantageously does not have to be densified or strong in itself, because it is reinforced and kept together by the shielding layer that is lying on top of it.

An advantageous example of such a non-woven that can be used for the compressible layer is felt. Felt is a textile material that is produced by matting, condensing and pressing fibres together. Felt can be made of natural fibres such as wool or animal fur, or from synthetic fibres such as petroleum-based acrylic or acrylonitrile or wood pulp-based rayon. Blended fibres are also possible. Felt is also an inexpensive lightweight material, is flexible and is easily compressible into shape with little force.

In a preferred embodiment the sealing ring can now be connected with the capsule body by means of a press fit. This makes it possible to keep the largely fibrous and/or cellulose and/or paper material sealing ring neatly in place without having to make use of an adhesive between the flange and the compressible layer, and without having to equip the side wall with projections or indentations for the sealing ring to be mechanically kept in place. Not having to use an adhesive for connecting the sealing ring to the flange is also a big advantage because it would require a specific type of adhesive since the fibrous and/or cellulose and/or paper material of the compressible layer and the capsule are totally different, whereas the adhesive also would be likely to penetrate partly into the fibrous and/or cellulose and/or paper material and thus, after hardening, would make the compressible layer less compressible and thus negatively influence the sealing performance of the sealing ring. The inventive combination of the inner fibrous and/or cellulose and/or paper material compressible inner layer with the outer liquid-impermeable shielding layer has made it possible to manoeuvre the sealing ring towards a tight press fit around for example a gradually increasing frusto-conical side wall of the capsule, without running a risk of the sealing ring trying to spring back away from the second end of the side wall. This particularly shall be the case when the shielding layer is made out of a metal material, like aluminium, since that shall have a tendency to get deformed in such a way during the press fitting such that it shall aid the sealing ring to stay in its press-fitted position with its inner compressible layer lying below it on top of the flange. Also such a press fit is advantageous because it makes it possible to have the sealing ring easily and quickly removed after beverage production during a recycling step. Furthermore the partly fibrous and/or cellulose and/or paper material sealing ring can now easily be separated from the capsule body that for example can be made from a biodegradable plastic or bioplastic or aluminium.

In order to obtain the secure but easily detachable position, the sealing ring can be configured to lie with the press fit all around directly against the second end of the circumferential side wall of the capsule body, for which the sealing ring has been manufactured with an inner radius that is smaller than an outer radius of the circumferential side wall of the capsule body at its second end. In addition thereto or in the alternative the flange may comprise a circumferential rim portion which projects from the flange in the direction towards the first end and which is configured to delimit a radial outer side of a circumferentially extending gutter, and wherein the sealing ring is configured to lie with the press fit all around directly against the rim portion of the flange of the capsule body, for which the sealing ring has been manufactured with an outer radius that is larger than an inner radius of the rim portion.

In an even further embodiment or in the alternative the outer shielding layer does not have to cover radial inner and/or outer edges of the inner compressible layer of the sealing ring, such that not only the radial inner and/or outer edges of the outer shielding layer of the sealing ring lie with said press fit directly against the capsule body, but that also the radial inner and/or outer edges of the inner compressible layer of the sealing ring lie with said press fit directly against the capsule body. A radial leakage of liquid during beverage production via the compressible layer of fibrous and/or cellulose and/or paper material is then efficiently prevented.

In addition or in the alternative the sealing ring can be connected with the capsule body by means of a suitable adhesive, like a glue, wherein an intermediate plastic lamination is provided in between the adhesive and the fibrous and/or cellulose and/or paper material compressible layer. This may further help to keep the largely fibrous and/or cellulose and/or paper material sealing ring neatly in place without having to equip the side wall with projections or indentations for the sealing ring to be mechanically kept in place. The adhesive can be provided directly against the compressible layer. In order to increase a bond strength between the fibrous and/or cellulose and/or paper material compressible layer and the capsule body, particularly if the capsule body is made out of metal, like aluminium, it is advantageous that the intermediate plastic lamination is provided in between them. This plastic lamination then can be provided directly against the fibrous and/or cellulose and/or paper material of the compressible layer, whereas the adhesive, like a heat seal lacquer, then can act between the plastic lamination and the capsule body.

In a further embodiment the sealing ring may be formed by a flat gasket that has been cut out of multilayered plate material that comprises the inner compressible layer of fibrous and/or cellulose and/or paper material with the outer shielding layer lying on top thereof. This is an economic manner of producing the sealing rings according to the invention, and perfectly corresponds with the above preferred feature of the outer shielding layer not having to cover the radial inner and/or outer edges of the inner compressible layer of the sealing ring, as well as with the press fit of the sealing ring on the capsule body, such that the mere provision of the shielding layer on top of the compressible layer already is well able to keep it fully dry during beverage production.

Further preferred embodiments are stated in the dependent subclaims.

The invention also relates to a beverage production machine according to claim 14 and to a method for production of a beverage according to claim 15.

### BRIEF DESCRIPTION OF THE DRAWINGS

For a better understanding of the present invention, and to show how the same may be carried into effect, reference will now be made, by way of example, to the accompanying drawings in which:
- Fig. 1 shows a perspective view of an assembly of a capsule body and a sealing ring in accordance with the present invention preceding press fitting of the sealing ring;
- Fig. 2 shows a partially cut open view of fig. 1;
- Fig. 3 shows, to a large scale, a schematic cross section through a sheet out of which the sealing ring of fig. 1 and 2 is cut;
- Fig. 4 shows a view similar to fig. 2 with the sealing ring press-fitted thereto;
- Fig. 5 shows an enlarged sectional partial view of fig. 4;
- Fig. 6 illustrate the relationship between the capsule and a pressing sleeve of a beverage production machine wherein the capsule has been pre-positioned between the pressing sleeve and a holder;
- Fig. 7 shows an enlarged partial view of fig. 6;
- Fig. 8 and 9 show the views of fig. 6 and 7 wherein the capsule has been pushed further into the pressing sleeve by the holder just before sealing between the capsule and the sleeve occurs;
- Fig. 10 and 11 show the views of fig. 8 and 9 wherein the capsule has been pushed further into the pressing sleeve by the holder such that sealing between the capsule and the sleeve has occurred; and
- Fig. 12-18 show exploded views of the various layers of variant embodiments of the sealing ring according to the invention.

### DETAILED DESCRIPTION OF THE DRAWINGS

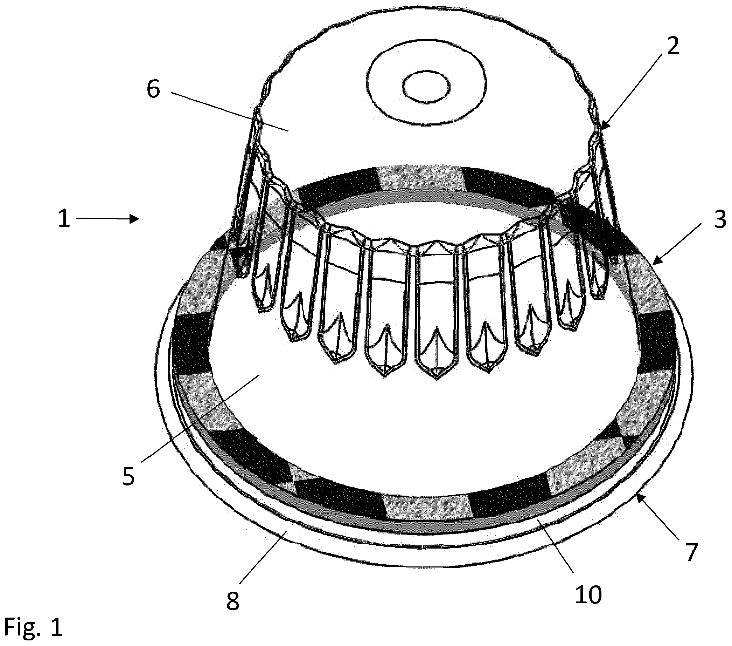

In fig. 1 a beverage capsule, in particular a coffee capsule, has been indicated with the reference numeral 1 and comprises an assembly of a capsule body 2 and a sealing ring 3. The capsule body 2 is cup-like and comprises a frustoconical side wall 5, a transverse base wall 6 at a smaller diameter first end of the side wall 5 and a radially outwardly extending flange 7 which encircles a larger diameter second end of the side wall 5.

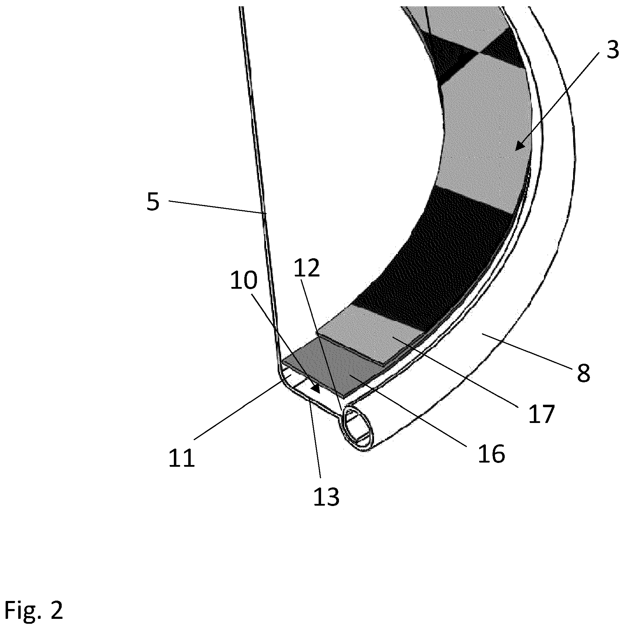

The flange 7, the adjacent part of the side wall 5, and the multi-layered sealing ring 3 are shown in section in fig. 2. The flange 7 has an inwardly rolled peripheral rim 8 which inhibits flexing of the flange 7 whilst coffee is being extracted.

A portion of the rim 8 projects from the flange 7 in the direction towards the smaller diameter first end of the capsule 1. A circumferential gutter 10 is delimited between the side wall 5 and the rim 8. A radially outer circumferential surface portion of the frustoconical side wall 5 constitutes a frustoconical cq gradually curved transitional shaped circumferential inner side wall 11 of the gutter 10. A radially inner circumferential surface portion of the rim 8, that here is flattened and extends parallel to a center axis of the capsule 1, constitutes a straight shaped circumferential outer side wall 12 of the gutter 10. A bottom 13 of the gutter 10 is formed by a flat portion of the flange 7 that extends perpendicular to the center axis of the capsule 1.

The sealing ring 3 is pre-positioned above the gutter 10 while circumventing the side wall 5 and is destined to come to lie with a tight fit in between the inner side wall 11 and the outer side wall 12 of the gutter 10.

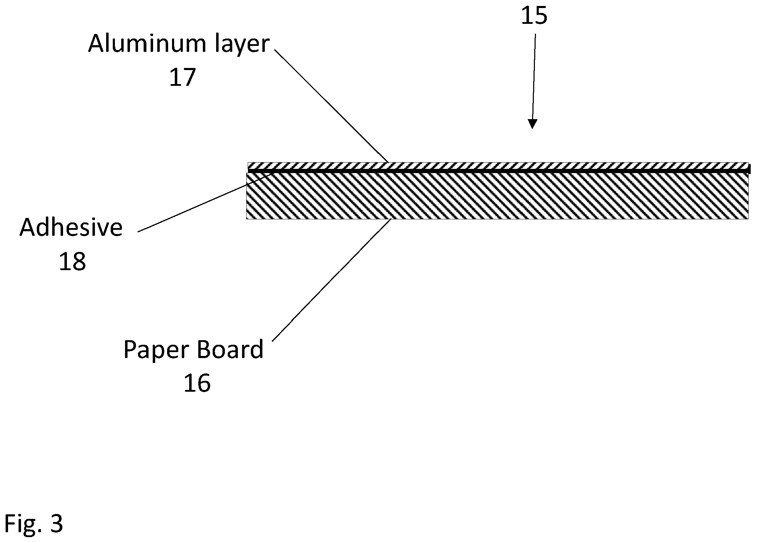

The sealing ring 3, that is shown in cross-section in fig. 2, has been made out of multi-layered plate material 15, as is shown in fig. 3. This multi-layered plate material 15 comprises an inner compressible paper board layer 16 and an outer aluminium shielding layer 17. The aluminium shielding layer 17 is formed by aluminium foil that is adhered by means of a suitable adhesive layer 18 to the paper board layer 16.

The sealing ring 3 can easily be cut out of the plate material 15 for example by means of a punching tool. With this the sealing ring 3 is dimensioned such that its inner radius is smaller than a smallest radial dimension of the inner side wall 11 of the gutter 10, and such that its outer radius is larger than a largest radial dimension of the outer side wall 12 of the gutter 10.

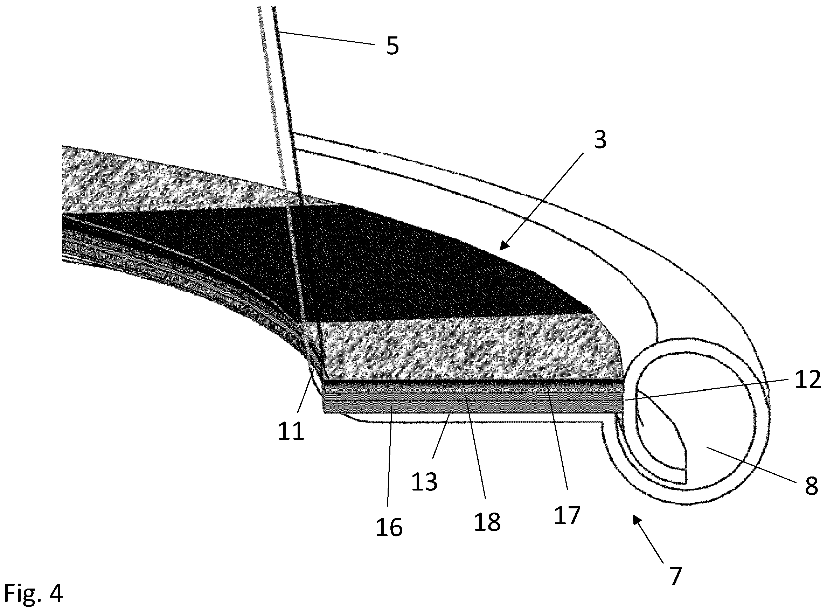

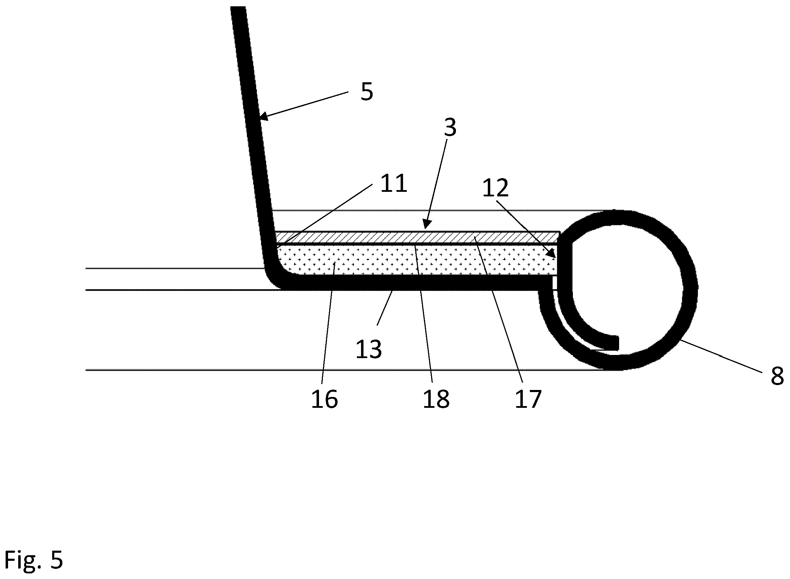

During manufacturing the sealing ring 3, starting from a position as shown in fig. 1, is pushed in the axial direction fully towards the flange 7 until it has come to lie with a press-fit inside the gutter 10. See fig. 4 and 5. During this pushing the paper board layer 16 shall get compressed somewhat in the axial and radial direction, and during this pushing the outer aluminium shielding layer 17 shall also get deformed somewhat in the axial and radial direction. During testing it has appeared that despite the frustoconical cq partly gradually curved shape of the outer side wall 12 of the gutter 10, the novel and inventive type of multi-layered sealing ring 3 is well able to neatly stay in position inside the gutter 10.

In this press-fitted position the inwardly directed surface of the paper layer 16 lies freely against the bottom 13 of the gutter 10, lies with a tight circumferential press-fit against the inner side wall 11 of the gutter 10, and lies with a tight circumferential press-fit against the outer side wall 12 of the gutter 10. In this press-fit position the aluminium shielding layer 17 keeps on being adhered to the outwardly directed surface of the paper layer 16, while also lying with a tight circumferential press-fit against the inner side wall 11 of the gutter 10, and while lying with a tight circumferential press-fit against the outer side wall 12 of the gutter 10.

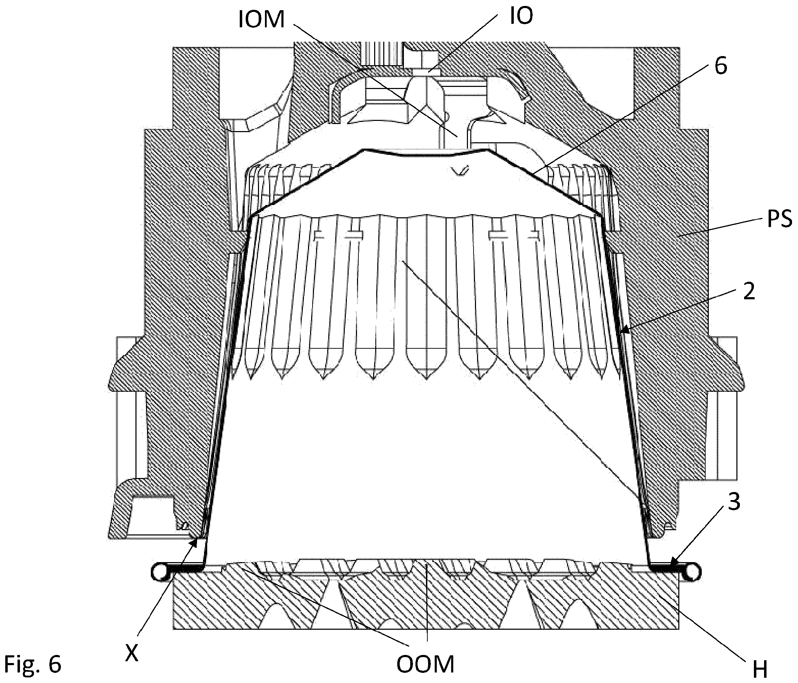

A possible use of the capsule 1 shall now be explained for fig. 6, 7 and 8 where a pressing sleeve PS of a beverage production machine is shown. The pressing sleeve PS defines a frusto-conical inner space that is somewhat larger than the capsule 1, such that the capsule body 2 fits inside it with some circumferential play.

With this use is made of a capsule 1 that already has got the sealing ring 3 press-fitted thereto, that already has been filled with a substance, in particular coffee powder, for producing a beverage, in particular coffee, after which it has been closed by a closing member, in particular an aluminium foil lid that is connected to the flange 7, for example by means of a heat seal.

Inside the sleeve PS, some projecting inlet opening members IOM, here spikes, are provided that are configured to automatically form liquid inlet openings in the base wall 6 of the capsule 1 during coupling and/or beverage production.

The sleeve PS further comprises an injection opening IO that is connected to a liquid supply for feeding heated pressurized water into the sleeve PS during beverage production.

In front of the pressing sleeve PS and facing its inner space, a holder H with some projecting outlet opening members OOM are provided that are configured to automatically form beverage outlet openings in the closing member of the capsule 1 during coupling and/or beverage production.

The pressing sleeve PS comprises a circumferential profiled front end X that is provided with a profile of bulges and radially extending notches that alternate each other in the circumferential direction, and that are configured to, in a coupled position, clamp the flange 7 of the capsule 1 against the holder H and to seal with the sealing ring 3.

The advantageous cooperation between the sealing ring 3 and the profiled front end X of the pressing sleeve PS shall now be explained in more detail with reference to the respective stages of coupling as shown in fig. 6-7, 8-9 and 10-11.

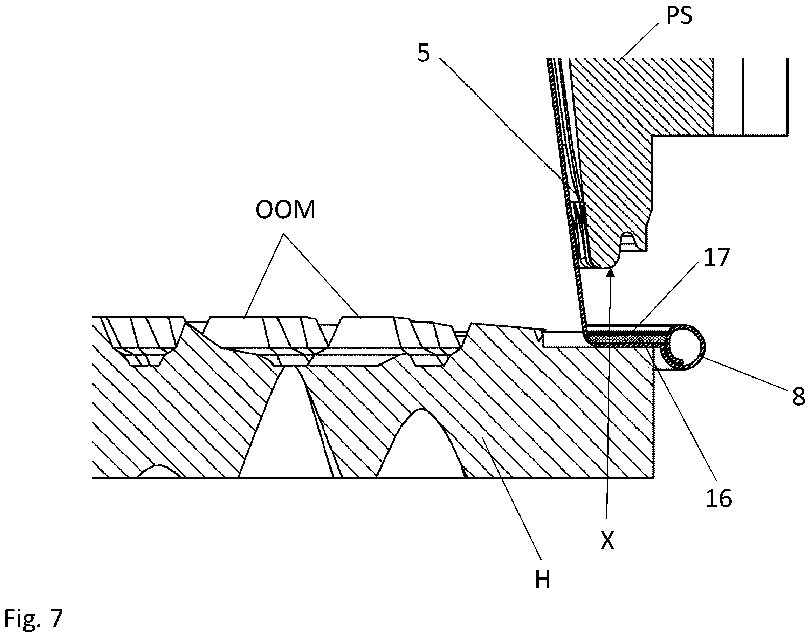

The capsule 1 is firstly pre-positioned inside the pressing sleeve PS, after which the sleeve PS and the holder H are move towards each other. See fig. 6 and 7.

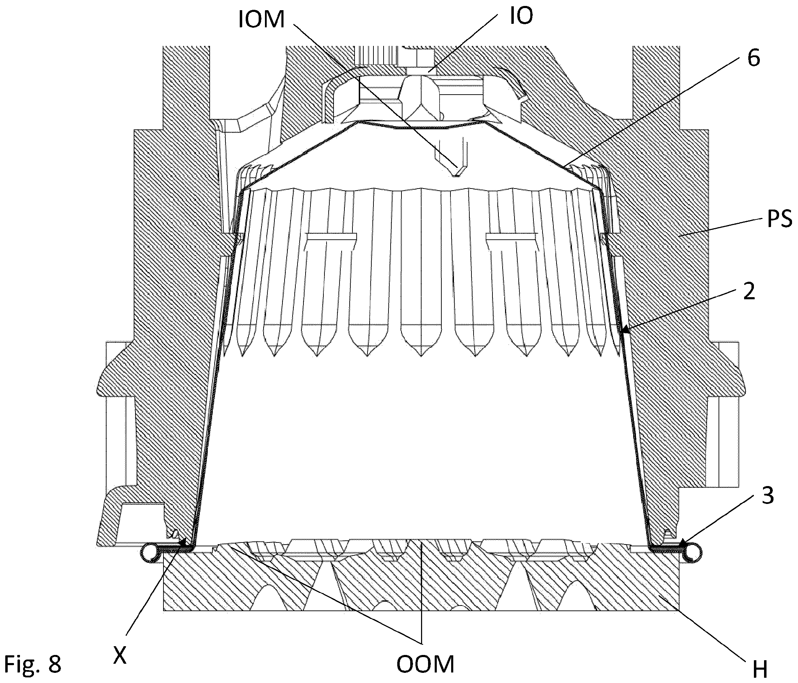

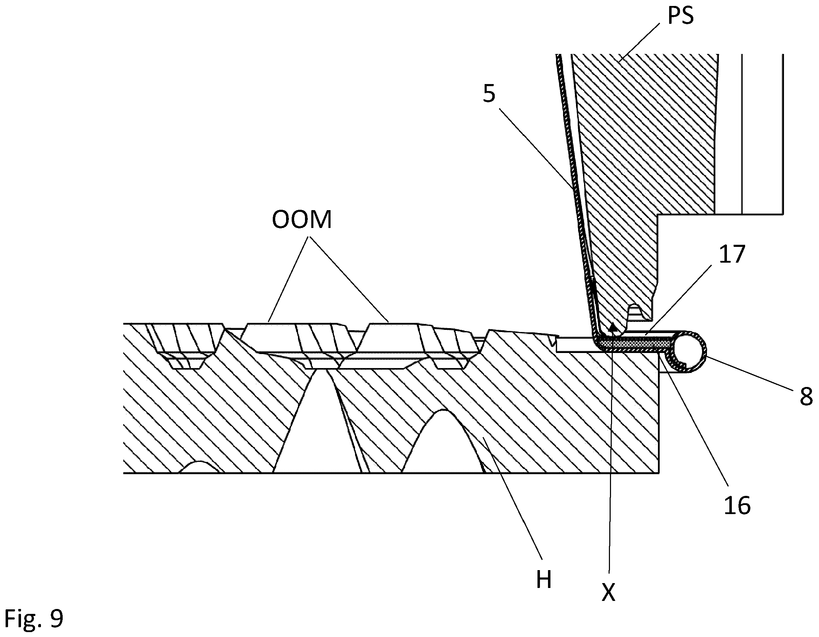

In fig. 8 and 9 an intermediate stage is shown in which the capsule 1 has already partly entered the pressing sleeve P but with the entire sealing ring 3 still lying non-compressed underneath the front end X of the pressing sleeve P.

During further coupling/closing of the pressing sleeve PS and the holder H towards each other, the capsule 1 shall be pushed further into the sleeve PS while having its base wall 6 get cut open/pierced by the pointed rigid inlet opening members IOM for forming the liquid inlet openings.

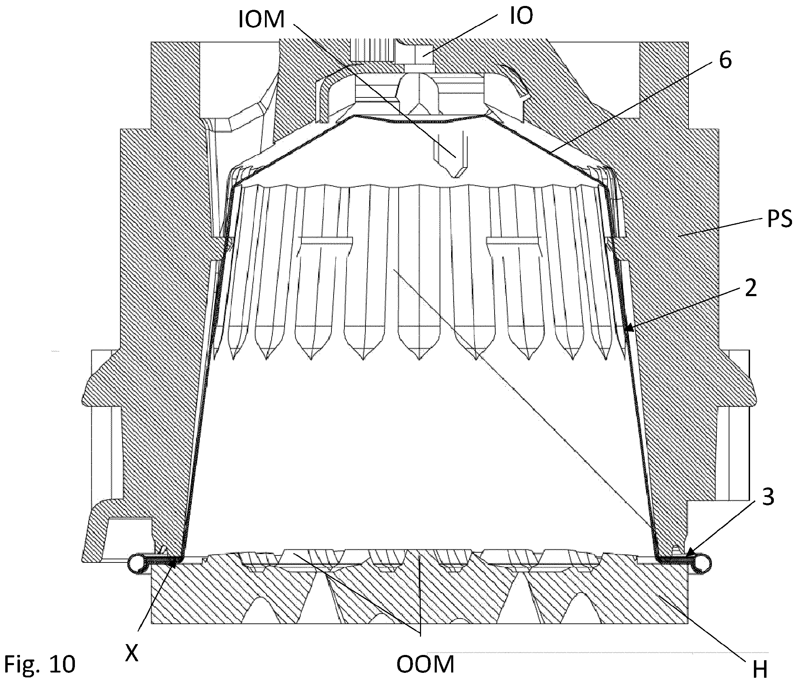

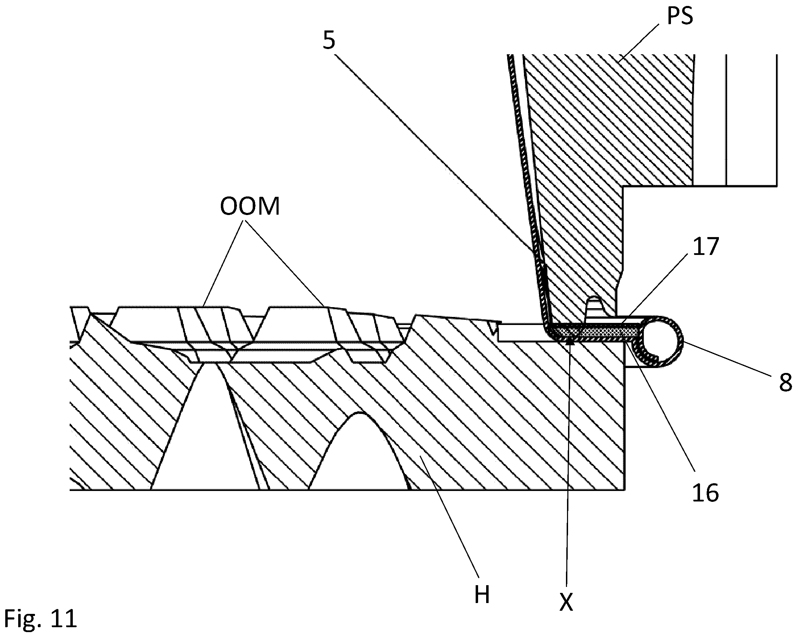

In fig. 10 and 11 the coupled position is shown in which the profiled front end X has entered into the sealing ring material in such a way that the profiled front end X has locally deformed the sealing ring 3 to such an account that it has taken over the profiled shape and has gotten to fully fill up its notches in a sealing manner.

When during this coupling the profiled front end X gets pressed against and into the sealing ring 3, the compressible paper layer 16 is well able to then get locally compressed by the bulges and start filling up the notches, while the aluminium shielding layer 17 is well able to get deformed to follow the profiled shaped along the bulges and into the notches. Advantageously according to the inventive thought, this local compressing of the sealing ring 3 during coupling shall not lead to serious cracks and tears starting to arise, nor inside the paper layer 16, nor inside the aluminium shielding layer 17. Not only has the paper layer 16 proven to be well able to undergo the foreseen local compressions, the aluminium shielding layer 17 on top of the compressible paper layer 16 has proven to be well able to undergo the foreseen deformations while at a same time keeping the paper layer 16 together.

When hot liquid under pressure is subsequently injected into the pressing sleeve PS, the liquid shall flow via the liquid inlet openings into the capsule 1. The quickly rising liquid pressure inside the capsule 1 then shall press the closing member forcedly against the outlet opening members OOM thus forcing the closing member to burst at a number of positions between the outlet opening members OOM for forming the beverage outlet openings, and from there drain as hot extracted beverage towards a cup, mug or other suitable container, ready for consumption.

The hot pressurized liquid shall also start to flow inside the pressing sleeve P around the outside of the capsule 1 and thus reach the sealing ring 3. The aluminium shielding layer 17 there shall form a water tight seal between the side wall 5 of the capsule 1 itself and the profiled front end X of the sleeve P.

The tight strong sealing abutment of the aluminium shielding layer 17 against the inner side wall 11 of the gutter 10 shall fully take care that the hot pressurized liquid shall not come into direct contact with the paper layer 16. No absorption of liquid into the paper layer 16 can thus takes place and the non-wetted paper layer 16 is well able to maintain its integrity without starting to crack or tear.

On the other hand the strong and water-impermeable aluminium shielding layer 17 adhered to the paper layer 16 shall also help to maintain the integrity of the paper layer 16 and thus of the entire sealing ring 3.

In fact, the continued pressing force of the front end X of the pressing sleeve PS against the sealing ring 3 together with the fact that this leakage water is of a relative high temperature, still above 80 degrees Celsius, the aluminium shielding layer 17 is even prone to start softening somewhat. This shall lead to the aluminium shielding layer 17, on top of the already present press-fitting forces, increase its sealing forces against the inner side wall 11 of the gutter 10 as well as against the profiled front end X of the pressing sleeve PS. This gives the shielding layer 17 an even greater inner deformability such that together with the compressibility of the paper layer 16, the entire sealing ring 3 can be deformed/compressed by the increasing water pressure firmer and firmer against the front end X of the pressing sleeve PS as well as against the capsule body 2.

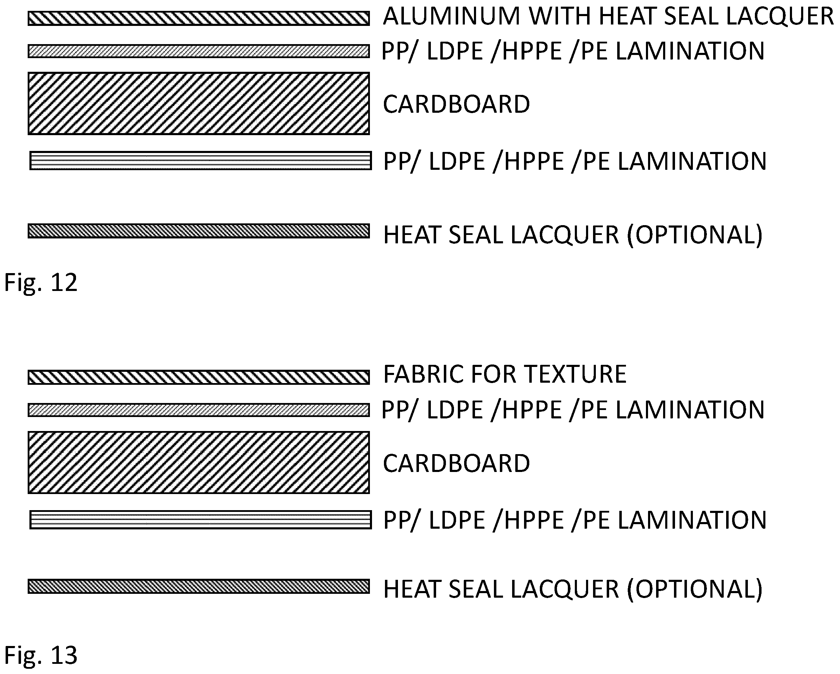

In fig. 12 a first variant of the various layers that can be used for the multi-layer sealing ring according to the invention is shown. The sealing ring here comprises an aluminium outer shielding layer that via a heat seal lacquer and an intermediate plastic lamination is strongly bonded to a cardboard compressible layer. The cardboard compressible layer is configured to, via an intermediate plastic lamination and a heat seal lacquer, be strongly bonded against a flange of a capsule body.

In fig. 13 a second variant of the various layers that can be used for the multi-layer sealing ring according to the invention is shown. The sealing ring here comprises a fabric for texture as outer layer that is bonded to the plastic lamination outer shielding layer.

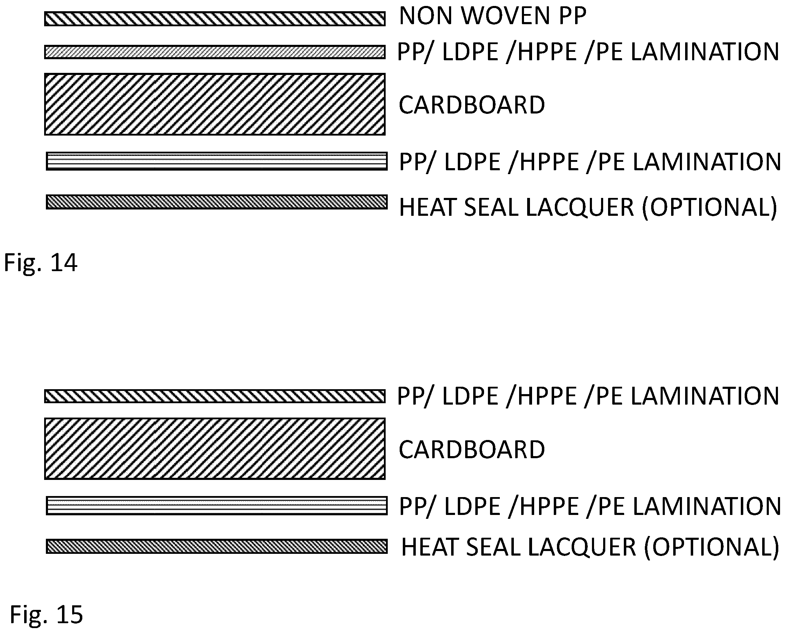

In fig. 14 a third variant of the various layers that can be used for the multi-layer sealing ring according to the invention is shown. The sealing ring here comprises a non-woven as outer layer that is bonded to the plastic lamination outer shielding layer.

In fig. 15 a fourth variant of the various layers that can be used for the multi-layer sealing ring according to the invention is shown. The sealing ring here no longer comprises the fabric or non-woven but immediately has the plastic lamination outer shielding layer lying at its outer side.

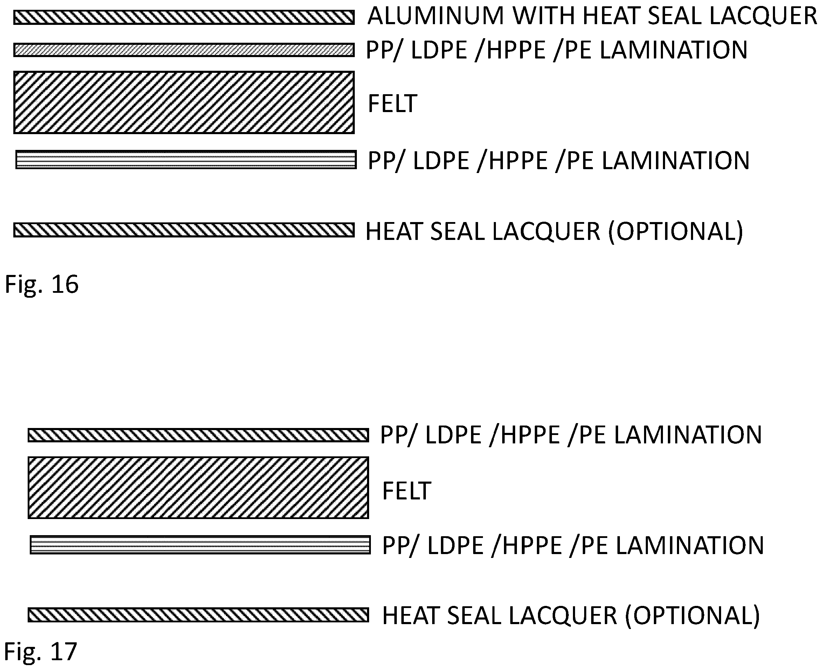

In fig. 16 a fifth variant of the various layers that can be used for the multi-layer sealing ring according to the invention is shown. The sealing ring here comprises felt as compressible layer, against which an aluminium outer shielding layer is bonded via a heat seal lacquer and an intermediate plastic lamination.

In fig. 17 a sixth variant of the various layers that can be used for the multi-layer sealing ring according to the invention is shown. The sealing ring here again comprises felt as compressible layer, against which this time a plastic lamination outer shielding layer is bonded.

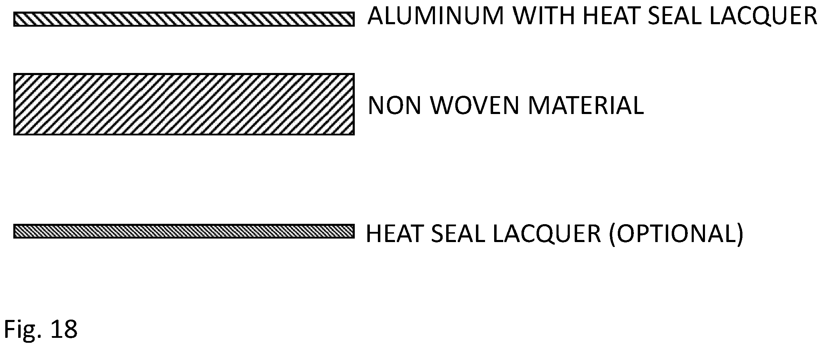

In fig. 18 a seventh variant of the various layers that can be used for the multi-layer sealing ring according to the invention is shown. The sealing ring here comprises an aluminium outer shielding layer that via a heat seal lacquer is directly bonded to a non-woven material compressible layer. The non-woven compressible layer is configured to, via a heat seal lacquer, be strongly bonded against a flange of a capsule body.

Besides the embodiments shown numerous variants are possible. For example the dimensions and shapes of the various parts can be altered. Also it is possible to make combinations between advantageous aspects of the shown embodiments. All kinds of materials can be used for making the capsule body and the respective sealing ring layers. Preferably those materials are biodegradable and/or recyclable.

Beside paper materials, the compressible layer may comprise any compressible fibrous and/or cellulose material.

Besides aluminium-containing materials such as aluminium and aluminium oxide (AlOx), the shielding layer may comprise any liquid-impermeable material, such as for instance other metal foils, ethylene vinyl alcohol (EVOH), silicion oxide (SiOx), Polyvinylalcohol (PVOH), metalized plastics, or a combination thereof. Also the materials for the shielding layer listed above can be laminated in combination with plastic films made of polypropylene (PP), polyethylene (PE), polyethylene terephtalate (PET), polyethylene naphthalate (PEN), polylactic acid (PLA), or a combination thereof, to create laminated shielding layers. Laminated shielding layers such as for instance EVOH/PP, PET/SiOx/PP, PET/AIOx/PP, PET/Aluminium/PE may also be applied.

The compressible layer preferably has a thickness in the axial direction of between 0.3mm-0.5mm The shielding layer preferably has a thickness in the axial direction of between 10-30micron, for example between 15 to 20 micron. This layer thicknesses may vary as long as the compressible layer of fibrous and/or cellulose and/or paper material remains being thicker, than a depth of notches or the like in the profiled front end of the pressing sleeve, and as long as the shielding layer of water-impermeable material remains being deformable or flexible enough for being able to follow the profiled shape of the front end of the pressing sleeve.

Instead of against the flange of the capsule body, the inventive sealing ring according to the invention can also be used on other positions on the capsule body. Instead of on the described frusto-conical shaped capsule, the inventive sealing ring can also be used in combination with other types of beverage capsules where a sealing ring is foreseen at an outer side of the capsule body, including ones where a closing member on the flange is foreseen to be provided during use with one or more liquid inlet openings while an opposing base wall is foreseen to be provided with one or more beverage outlet openings.

Should in practice the press-fit appear not to be enough for keeping the sealing ring in place on the frusto-conical side wall, then of course additional measures can be taken, like using an adhesive and or mechanical deformation steps of the circumferential side wall of the capsule just above or right there were the sealing ring is aimed to be positioned. Those additional measures can also be used as an alternative for the described press-fitting arrangement.

Instead of the sealing ring merely shielding of a top side of the compressible layer, it is also possible for the shielding layer to extend along the radial inner and/or outer edges and/or along a bottom side of the compressible layer of fibrous and/or cellulose and/or paper material. Then also the aimed shielding the inner compressible layer of fibrous and/or cellulose and/or paper material against pressurized liquid during beverage production can be obtained and the press-fitting then even won't be necessary for obtaining this.

It should be understood that various changes and modifications to the presently preferred embodiments can be made without departing from the scope of the invention, and therefore will be apparent to those skilled in the art. It is therefore intended that such changes and modifications be covered by the appended claims.

## Claims

1. A capsule (1) for containing a substance from which a beverage can be produced, the capsule (1) being designed for insertion in a beverage production machine in which pressurized liquid enters the capsule (1) in order to interact with the substance in the capsule (1) and to drain a beverage from the capsule (1), comprising:
- a cup-like capsule body (2) that comprises:
o a circumferential side wall (5);
o a transverse base wall (6) at a first end of the side wall (5); and
∘ a radially outwardly protruding flange (7) encircling the side wall (5) at its second end,
- a multi-layered sealing ring (3) lying against the flange (7) while encircling the side wall (5), wherein the sealing ring (3) comprises:
- a compressible layer (16) of fibrous and/or cellulose and/or paper material,
**characterized in that,**
the sealing ring (3) further comprises:
- an outer shielding layer (17) of a liquid-impermeable material,
wherein the shielding layer (17) is provided on an outwardly directed external surface of the sealing ring (3) and wherein the shielding layer (17) is configured for shielding the inner compressible layer (16) of fibrous and/or cellulose and/or paper material against pressurized liquid during beverage production.

2. A capsule according to claim 1, wherein the outer shielding layer (17) of the sealing ring (3) is made out of metal, in particular aluminium.

3. Capsule according to claim 2, wherein an intermediate plastic lamination is provided in between the metal outer shielding layer (17) and the fibrous and/or cellulose and/or paper material compressible layer (16).

4. Capsule according to claim 1, wherein the outer shielding layer (17) of the sealing ring (3) is made out of plastic, in particular a plastic lamination.

5. Capsule according to one of the preceding claims, wherein the fibrous and/or cellulose and/or paper material of the compressible layer (16) comprises cardboard, in particular made out of waste paper.

6. Capsule according to one of the preceding claims, wherein the fibrous and/or cellulose and/or paper material of the compressible layer (16) comprises non-woven material, in particular felt.

7. Capsule according to one of the preceding claims, wherein the sealing ring (3) is connected with the capsule body (2) by means of a press fit.

8. Capsule according to claim 7, wherein the sealing ring (3) is configured to lie with said press fit all around directly against the second end of the side wall (5) of the capsule body (2), for which the sealing ring (3) has been manufactured with an inner radius that is smaller than an outer radius of the side wall (5) of the capsule body (2) at its second end.

9. Capsule according to one of the preceding claims 7-8, wherein the flange (7) comprises a circumferential rim portion which projects from the flange (7) in the direction towards the first end and which is configured to delimit a radial outer side wall (12) of a circumferentially extending gutter (10), and
wherein the sealing ring (3) is configured to lie with said press fit all around directly against the outer side wall (12) of the gutter (10) rim portion (8') of the flange (7) of the capsule body (2), for which the sealing ring (3) has been manufactured with an outer radius that is larger than an inner radius of the outer side wall (12).

10. Capsule according to one of the preceding claims 7-9, wherein the outer shielding layer (17) does not cover radial inner and/or outer edges of the inner compressible layer (16) of the sealing ring (3),
wherein the radial inner and/or outer edges of the outer shielding layer (17) of the sealing ring (3) lie with said press fit directly against the capsule body (2), and
wherein also the radial inner and/or outer edges of the inner compressible layer (16) of the sealing ring (3) lie with said press fit directly against the capsule body (2).

11. Capsule according to one of the preceding claims, wherein the sealing ring (3) is connected with the capsule body (2) by means of an adhesive, and wherein an intermediate plastic lamination is provided in between the adhesive and the fibrous and/or cellulose and/or paper material compressible layer (16).

12. Capsule according to one of the preceding claims, wherein the sealing ring (3) is formed by a flat gasket that has been cut out of multilayered plate material that comprises the **inner compressible** layer (16) of fibrous and/or cellulose and/or paper material with the outer shielding layer (17) lying on top thereof.

13. Capsule according to one of the preceding claims, wherein the side wall (5) of the capsule (1) is frustoconical, with the transverse base wall (6) at a first smaller diameter end of the side wall (5), and the radially outwardly protruding flange (7) encircling said side wall (2) at a second larger diameter end.

14. A beverage production machine comprising:
- a capsule (1) according to one of the preceding claims; and
- a beverage production machine having:
∘ a pressing sleeve (PS) for sealing with the capsule (1); and
∘ an injection opening (IO) for feeding pressurized liquid, in particular heated liquid, into the capsule (1),
wherein the sealing ring (3) of the capsule (1) and the pressing sleeve (PS) are configured to seal with each other during beverage production such that the outer shielding layer (17) on the outwardly directed external surface of the sealing ring (3) shields the inner compressible layer (16) of fibrous and/or cellulose and/or paper material against pressurized liquid during beverage production for preventing the compressible layer (16) of fibrous and/or cellulose and/or paper material to absorb the liquid.

15. A method for production of a beverage, comprising the following steps:
- providing a capsule (1) according to one of the preceding claims that contains a substance from which a beverage can be produced and that is closed by a closing member connected to the flange (7);
- positioning the capsule (1) in a beverage production machine;
- making inlet and outlet openings in the base wall (6) and the closing member while injecting a pressurized liquid into the capsule (1) for interaction with the substance inside the capsule (1), and draining a beverage from the capsule (1),
wherein the sealing ring (3) of the capsule (1) and the pressing sleeve (PS) seal with each other during beverage production such that the outer shielding layer (17) on the outwardly directed external surface of the sealing ring (3) shields the inner compressible layer (16) of fibrous and/or cellulose and/or paper material against pressurized liquid during the beverage production for preventing the compressible layer (16) of fibrous and/or cellulose and/or paper material to absorb the liquid.

## Patentansprüche

1. Kapsel (1) zum Aufnehmen einer Substanz, aus der ein Getränk produziert werden kann, wobei die Kapsel (1) zum Einführen in eine Getränkeproduktionsmaschine konzipiert ist, in der unter Druck stehende Flüssigkeit in die Kapsel (1) eintritt, um mit der Substanz in der Kapsel (1) zu interagieren und ein Getränk aus der Kapsel (1) ablaufen zu lassen, umfassend:
- einen schalenartigen Kapselkörper (2), der Folgendes umfasst:
o eine umlaufende Seitenwand (5);
o eine Querbasiswand (6) an einem ersten Ende der Seitenwand (5); und
o einen radial nach außen vorstehenden Flansch (7), der die Seitenwand (5) an deren zweiten Ende umgibt,
- einen mehrschichtigen Dichtring (3), der an dem Flansch (7) anliegt und die Seitenwand (5) umgibt, wobei der Dichtring (3) umfasst:
- eine komprimierbare Schicht (16) aus faserigem und/oder Cellulose- und/oder Papiermaterial,
**dadurch gekennzeichnet, dass**
der Dichtring (3) ferner umfasst:
- eine äußere Abschirmschicht (17) aus einem flüssigkeitsundurchlässigen Material,
wobei die Abschirmschicht (17) auf einer nach außen gerichteten Außenoberfläche des Dichtrings (3) bereitgestellt ist, und wobei die Abschirmschicht (17) zum Abschirmen der inneren komprimierbaren Schicht (16) aus faserigem und/oder Cellulose- und/oder Papiermaterial gegen unter Druck stehende Flüssigkeit während der Getränkeproduktion ausgelegt ist.

2. Kapsel nach Anspruch 1, wobei die äußere Abschirmschicht (17) des Dichtrings (3) aus Metall, insbesondere Aluminium, erstellt worden ist.

3. Kapsel nach Anspruch 2, wobei zwischen der metallischen äußeren Abschirmschicht (17) und der komprimierbaren faserigen und/oder Cellulose- und/oder Papiermaterialschicht (16) eine Kunststoff-Zwischenlaminierung bereitgestellt ist.

4. Kapsel nach Anspruch 1, wobei die äußere Abschirmschicht (17) des Dichtrings (3) aus Kunststoff, insbesondere einer Kunststofflaminierung, erstellt worden ist.

5. Kapsel nach einem der vorhergehenden Ansprüche, wobei das faserige und/oder Cellulose- und/oder Papiermaterial der komprimierbaren Schicht (16) Karton umfasst, insbesondere erstellt aus Altpapier.

6. Kapsel nach einem der vorhergehenden Ansprüche, wobei das faserige und/oder Cellulose- und/oder Papiermaterial der komprimierbaren Schicht (16) Vliesmaterial, insbesondere Filz, umfasst.

7. Kapsel nach einem der vorhergehenden Ansprüche, wobei der Dichtring (3) mit dem Kapselkörper (2) durch eine Presspassung verbunden ist.

8. Kapsel nach Anspruch 7, wobei der Dichtring (3) ausgelegt ist, um mit der Presspassung gänzlich ringsum direkt an dem zweiten Ende der Seitenwand (5) des Kapselkörpers (2) anzuliegen, für den der Dichtring (3) gefertigt wurde, mit einem Innenradius, der kleiner als ein Außenradius der Seitenwand (5) des Kapselkörpers (2) an deren zweiten Ende ist

9. Kapsel nach einem der vorhergehenden Ansprüche 7-8, wobei der Flansch (7) einen umlaufenden Randabschnitt umfasst, der von dem Flansch (7) in Richtung auf das erste Ende vorsteht, und der dazu ausgelegt ist, eine radiale äußere Seitenwand (12) einer sich in Umfangsrichtung erstreckenden Rinne (10) zu begrenzen, und
wobei der Dichtring (3) dazu ausgelegt ist, mit der Presspassung ringsum direkt an der äußeren Seitenwand (12) des Randabschnitts (8') der Rinne (10) des Flansches (7) des Kapselkörpers (2) zu liegen, für den der Dichtring (3) gefertigt wurde, mit einem Außenradius, der größer als ein Innenradius der äußeren Seitenwand (12) ist.

10. Kapsel nach einem der vorhergehenden Ansprüche 7-9, wobei die äußere Abschirmschicht (17) keine radialen inneren und/oder äußeren Kanten der inneren komprimierbaren Schicht (16) des Dichtrings (3) bedeckt,
wobei die radialen inneren und/oder äußeren Kanten der äußeren Abschirmschicht (17) des Dichtrings (3) mit der Presspassung direkt an dem Kapselkörper (2) anliegen, und
wobei auch die radialen inneren und/oder äußeren Kanten der inneren komprimierbaren Schicht (16) des Dichtrings (3) mit der Presspassung direkt an dem Kapselkörper (2) anliegen.

11. Kapsel nach einem der vorhergehenden Ansprüche, wobei der Dichtring (3) mittels eines Klebstoffs mit dem Kapselkörper (2) verbunden ist, und wobei zwischen dem Klebstoff und der komprimierbaren faserigen und/oder Cellulose- und/oder Papiermaterialschicht (16) eine Kunststoff-Zwischenlaminierung bereitgestellt ist.

12. Kapsel nach einem der vorhergehenden Ansprüche, wobei der Dichtring (3) durch eine aus mehrschichtigem Plattenmaterial ausgeschnittene Flachdichtung gebildet ist, die die innere komprimierbare Schicht (16) aus faserigen und/oder Cellulose- und/oder Papiermaterial mit der darauf liegenden äußeren Abschirmschicht (17) umfasst.

13. Kapsel nach einem der vorhergehenden Ansprüche, wobei die Seitenwand (5) der Kapsel (1) kegelstumpfförmig ist, wobei die Querbasiswand (6) an einem ersten Ende der Seitenwand (5) ist, welches einen kleineren Durchmesser aufweist, und der radial nach außen vorstehende Flansch (7) die Seitenwand (2) an einem zweiten Ende, das einen größeren Durchmesser aufweist, umschließt.

14. Getränkeproduktionsmaschine, umfassend:
- eine Kapsel (1) nach einem der vorhergehenden Ansprüche; und
- eine Getränkeproduktionsmaschine mit:
o einer Druckhülse (PS) zum Abdichten mit der Kapsel (1); und
o einer Injektionsöffnung (IO) zum Zuführen von unter Druck stehender Flüssigkeit, insbesondere erwärmter Flüssigkeit, in die Kapsel (1),
wobei der Dichtring (3) der Kapsel (1) und die Druckhülse (PS) dazu ausgelegt sind, während der Getränkeproduktion miteinander abzudichten, so dass die äußere Abschirmschicht (17) auf der nach außen gerichteten Außenoberfläche des Dichtrings (3) die innere komprimierbar Schicht (16) aus faserigem und/oder Cellulose- und/oder Papiermaterial gegen unter Druck stehende Flüssigkeit während der Getränkeproduktion abschirmt, um zu verhindern, dass die komprimierbar Schicht (16) aus faserigem und/oder Cellulose- und/oder Papiermaterial die Flüssigkeit absorbiert.

15. Verfahren zur Produktion eines Getränks, umfassend die folgenden Schritte:
- Bereitstellen einer Kapsel (1) nach einem der vorhergehenden Ansprüche, die eine Substanz enthält, aus der ein Getränk produziert werden kann, und die durch ein mit dem Flansch (7) verbundenes Verschlusselement verschlossen ist;
- Positionieren der Kapsel (1) in einer Getränkeproduktionsmaschine;
- Erstellen von Einlass- und Auslassöffnungen in der Basiswand (6) und dem Verschlusselement, während eine unter Druck stehende Flüssigkeit in die Kapsel (1) zur Interaktion mit der Substanz in der Kapsel (1) injiziert wird, und Abfließen lassen eines Getränks aus der Kapsel (1),
wobei der Dichtring (3) der Kapsel (1) und die Druckhülse (PS) während der Getränkeproduktion derart miteinander abdichten, dass die äußere Abschirmschicht (17) auf der nach außen gerichteten Außenoberfläche des Dichtrings (3) die innere komprimierbar Schicht (16) aus faserigem und/oder Cellulose- und/oder Papiermaterial gegen unter Druck stehende Flüssigkeit während der Getränkeproduktion abschirmt, um zu verhindern, dass die komprimierbar Schicht (16) aus faserigem und/oder Cellulose- und/oder Papiermaterial die Flüssigkeit absorbiert.

## Revendications

1. Capsule (1) destinée à contenir une substance à partir de laquelle une boisson peut être produite, la capsule (1) étant conçue pour être insérée dans une machine de production de boisson dans laquelle un liquide sous pression pénètre dans la capsule (1) afin d'interagir avec la substance dans la capsule (1) et d'évacuer une boisson de la capsule (1), comprenant :
- un corps de capsule en forme de coupelle (2) qui comprend :
o une paroi latérale circonférentielle (5) ;
o une paroi transversale de base (6) à une première extrémité de la paroi latérale (5) ; et
o une collerette faisant saillie radialement vers l'extérieur (7) encerclant la paroi latérale (5) à sa deuxième extrémité,
- une bague d'étanchéité multicouche (3) reposant contre la collerette (7) tout en encerclant la paroi latérale (5), la bague d'étanchéité (3) comprenant :
- une couche compressible (16) de matériau fibreux et/ou cellulosique et/ou en papier,
**caractérisée en ce que**
la bague d'étanchéité (3) comprend en outre :
- une couche de protection externe (17) dans un matériau imperméable aux liquides,
dans laquelle la couche de protection (17) est disposée sur une surface externe dirigée vers l'extérieur de la bague d'étanchéité (3) et dans laquelle la couche de protection (17) est conçue pour protéger la couche compressible interne (16) de matériau fibreux et/ou cellulosique et/ou en papier contre le liquide sous pression pendant la production de boisson.

2. Capsule selon la revendication 1, dans laquelle la couche de protection externe (17) de la bague d'étanchéité (3) est faite de métal, en particulier d'aluminium.

3. Capsule selon la revendication 2, dans laquelle un stratifié plastique intermédiaire est disposé entre la couche de protection externe métallique (17) et la couche compressible (16) de matériau fibreux et/ou cellulosique et/ou en papier.

4. Capsule selon la revendication 1, dans laquelle la couche de protection externe (17) de la bague d'étanchéité (3) est faite de plastique, en particulier d'un stratifié plastique.

5. Capsule selon une des revendications précédentes, dans laquelle le matériau fibreux et/ou cellulosique et/ou en papier de la couche compressible (16) comprend du carton, en particulier fait de vieux papier.

6. Capsule selon une des revendications précédentes, dans laquelle le matériau fibreux et/ou cellulosique et/ou en papier de la couche compressible (16) comprend un matériau non tissé, en particulier du feutre.

7. Capsule selon une des revendications précédentes, dans laquelle la bague d'étanchéité (3) est reliée au corps de capsule (2) au moyen d'un emmanchement à force.

8. Capsule selon la revendication 7, dans laquelle la bague d'étanchéité (3) est conçue pour reposer avec ledit emmanchement à force tout autour directement contre la deuxième extrémité de la paroi latérale (5) du corps de capsule (2), ce pour quoi la bague d'étanchéité (3) a été fabriquée avec un rayon interne qui est inférieur à un rayon externe de la paroi latérale (5) du corps de capsule (2) à sa deuxième extrémité.

9. Capsule selon une des revendications 7 et 8 précédentes, dans laquelle la collerette (7) comprend une partie de rebord circonférentiel qui fait saillie depuis la collerette (7) dans la direction de la première extrémité et qui est conçue pour délimiter une paroi latérale externe radiale (12) d'une gouttière s'étendant circonférentiellement (10), et
dans laquelle la bague d'étanchéité (3) est conçue pour reposer avec ledit emmanchement à force tout autour directement contre la paroi latérale externe (12) de la partie de rebord (8') de la gouttière (10) de la collerette (7) du corps de capsule (2), ce pour quoi la bague d'étanchéité (3) a été fabriquée avec un rayon externe qui est supérieur à un rayon interne de la paroi latérale externe (12).

10. Capsule selon une des revendications 7 à 9 précédentes, dans laquelle la couche de protection externe (17) ne recouvre pas des bords radiaux interne et/ou externe de la couche compressible interne (16) de la bague d'étanchéité (3), dans laquelle les bords radiaux interne et/ou externe de la couche de protection externe (17) de la bague d'étanchéité (3) reposent avec ledit emmanchement à force directement contre le corps de capsule (2), et
dans laquelle également les bords radiaux interne et/ou externe de la couche compressible interne (16) de la bague d'étanchéité (3) reposent avec ledit emmanchement à force directement contre le corps de capsule (2).

11. Capsule selon une des revendications précédentes, dans laquelle la bague d'étanchéité (3) est reliée au corps de capsule (2) au moyen d'un adhésif, et dans laquelle un stratifié plastique intermédiaire est disposé entre l'adhésif et la couche compressible (16) de matériau fibreux et/ou cellulosique et/ou en papier.

12. Capsule selon une des revendications précédentes, dans laquelle la bague d'étanchéité (3) est formée par un joint d'étanchéité plat qui a été découpé dans un matériau en plaque multicouche qui comprend la couche compressible interne (16) de matériau fibreux et/ou cellulosique et/ou en papier avec la couche de protection externe (17) reposant au-dessus de celle-ci.

13. Capsule selon une des revendications précédentes, dans laquelle la paroi latérale (5) de la capsule (1) est tronconique, avec la paroi transversale de base (6) à une première extrémité de plus petit diamètre de la paroi latérale (5), et la collerette faisant saillie radialement vers l'extérieur (7) encerclant ladite paroi latérale (2) à une deuxième extrémité de plus grand diamètre.

14. Machine de production de boisson comprenant :
- une capsule (1) selon une des revendications précédentes ; et
- une machine de production de boisson comportant :
o un manchon de compression (PS) destiné à faire l'étanchéité avec la capsule (1) ; et
o une ouverture d'injection (IO) destinée à introduire un liquide sous pression, en particulier un liquide chauffé, dans la capsule (1),
dans laquelle la bague d'étanchéité (3) de la capsule (1) et le manchon de compression (PS) sont conçus pour faire l'étanchéité l'un avec l'autre pendant la production de boisson de telle sorte que la couche de protection externe (17) sur la surface externe dirigée vers l'extérieur de la bague d'étanchéité (3) protège la couche compressible interne (16) de matériau fibreux et/ou cellulosique et/ou en papier contre le liquide sous pression pendant la production de boisson afin d'empêcher la couche compressible (16) de matériau fibreux et/ou cellulosique et/ou en papier d'absorber le liquide.

15. Procédé de production d'une boisson, comprenant les étapes suivantes :
- obtention d'une capsule (1) selon une des revendications précédentes qui contient une substance à partir de laquelle une boisson peut être produite et qui est fermée par un élément de fermeture relié à la collerette (7) ;
- positionnement de la capsule (1) dans une machine de production de boisson ;
- création d'ouvertures d'entrée et de sortie dans la paroi de base (6) et l'élément de fermeture simultanément à l'injection d'un liquide sous pression dans la capsule (1) pour interaction avec la substance à l'intérieur de la capsule (1), et évacuation d'une boisson de la capsule (1),
dans lequel la bague d'étanchéité (3) de la capsule (1) et le manchon de compression (PS) font l'étanchéité l'un avec l'autre pendant la production de boisson de telle sorte que la couche de protection externe (17) sur la surface externe dirigée vers l'extérieur de la bague d'étanchéité (3) protège la couche compressible interne (16) de matériau fibreux et/ou cellulosique et/ou en papier contre le liquide sous pression pendant la production de boisson afin d'empêcher la couche compressible (16) de matériau fibreux et/ou cellulosique et/ou en papier d'absorber le liquide.
